# EUROPÄISCHE PATENTSCHRIFT

(11) **EP 0 343 469 B1**
(45) Veröffentlichungstag und Bekanntmachung des Hinweises auf die Patenterteilung: **04.08.1993**
(21) Anmeldenummer: 89108674.6
(22) Anmeldetag: 13.05.1989
(51) Int. Cl.: A23L 2/04, A23N 1/00

(54) **Verfahren und Vorrichtung zur Saftgewinnung**
Process and apparatus for obtaining juice
Procédé et appareil pour l'obtention de jus

(30) Priorität: 25.05.1988 DE 3817689
(43) Veröffentlichungstag der Anmeldung: 29.11.1989
(73) Patentinhaber: Krauss-Maffei Aktiengesellschaft, 80997 München (DE); Bini, Giorgio, Dr., Emilia-Romagna (IT)
(72) Erfinder: Brixel, Berthold, Ing. (grad), D-8376 Teisnach (DE); Bini, Giorgio, Dr., Emilia-Romagna (IT)

(56) Entgegenhaltungen:
- DD-A- 119 523
- FR-A- 830 547
- GB-A- 1 165 319
- US-A- 3 346 392
- FOOD TECHNOLOGY, Juli 1975, Seiten 32-38; M.A. Rao et al.: "Extraction of Apple Juice with a solid bowl decaner centrifuge"

## Beschreibung

Die Erfindung betrifft ein Verfahren und eine Vorrichtung von der im Oberbegriff des Anspruchs 1 angegebenen Art.

Ein Verfahren dieser Art ist aus der Literatur, "Food Technology", July 1975, "Extraction of Apple Juice with a Solid Bowl Decanter Centrifuge", Seiten 32 bis 37 bekannt, bei dem die aus Äpfeln hergestellte Maische in einer Vollmantel-Dekantierzentrifuge in eine feste und eine flüssige Phase getrennt wird. Aufgrund der langen Dauer des Verfahrens reagiert das In der Maische und In der flüssigen Phase enthaltene Pektin mit dem Luftsauerstoff und muß in gesondert vorzunehmenden Extraktionsstufen durch enzymatische oder andere biochemische Behandlungen wieder abgetrennt werden.

Abgesehen von dem verfahrenstechnischen Aufwand einer enzymatischen oder biochemischen Nachbehandlung kann bei einem derart behandelten Lebensmittel nicht mehr von völliger Naturbelassenheit gesprochen werden.

Der Erfindung liegt die Aufgabe zugrunde, ein Verfahren zur Herstellung von Saft zu schaffen, bei dem die Saftextraktion und die Pektinabtrennung frei von enzymatischen oder biochemischen Behandlungsstufen und in kontinuierlicher Weise erfolgen kann.

Die Lösung dieser Aufgabe ist im Anspruch 1 angegeben. Die Unteransprüche beziehen sich auf vorteilhafte Maßnahmen und Weiterbildungen der Lösung.

Eine Ausführungsform der Erfindung wird anhand der Zeichnung näher erläutert. Es zeigt:
- Fig. 1: die schematische Darstellung einer Filterzentrifuge im Halbschnitt mit nachgeordnetem Schüttelsieb,
- Fig. 2: eine Detailansicht der Siebfläche der Filterzentrifuge,
- Fig. 3: ein Blockschaltbild für das Herstellungsverfahren von Apfelsaft.

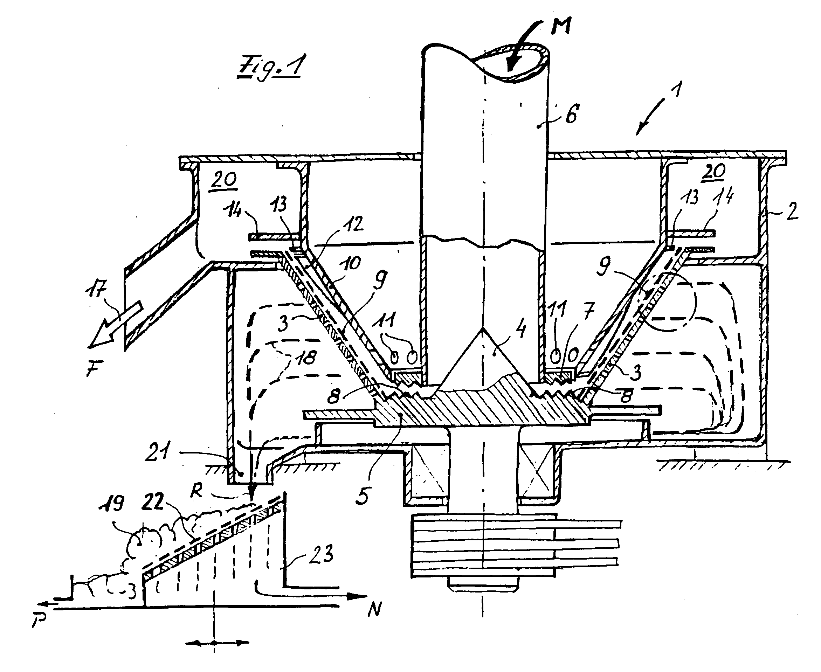

Die Fig. 1 zeigt eine Filterzentrifuge 1 mit einem Zentrifugengehäuse 2, in dem ein Siebkegel 3 gelagert ist, dessen konisch verjüngtes Ende mit einer einen Verteilkegel 4 tragenden Bodenplatte 5 abgeschlossen ist. In den Bereich der Bodenplatte 5 mündet ein am Zentrifugengehäuse 2 abgestütztes Einlaufrohr 6 für Maische (M), an dessen Ende ein Zahnbordflansch 7 befestigt ist, dem auf der Bodenplatte 5 im Abstand eine Zahnringscheibe 8 zugeordnet ist. Der Siebfläche 9 des Siebkegels 3 ist im Abstand ein im Zentrifugengehäuse 2 befestigter Leitkegel 10 zugeordnet, der im Bereich der Bodenplatte 5 Öffnungen 11 für die Einleitung von Luft und/oder Inertgas in den zwischen Siebfläche 9 und Leitkegel 10 umschlossenen Raum aufweist.

Auf der der Siebfläche 9 zugewandten Fläche sind am Leitkegel 10 wendelförmig verlaufende Leitbleche 12 befestigt, die entgegen der Drehrichtung des Siebkegels 2 geneigt sind. Am konisch erweiterten Ende des Leitkegels 10 sind mindestens ein oder zwei den Ringspalt zwischen Siebkegel 3 und Leitkegel 10 verengende Sperringe 13 und 14 angeordnet.

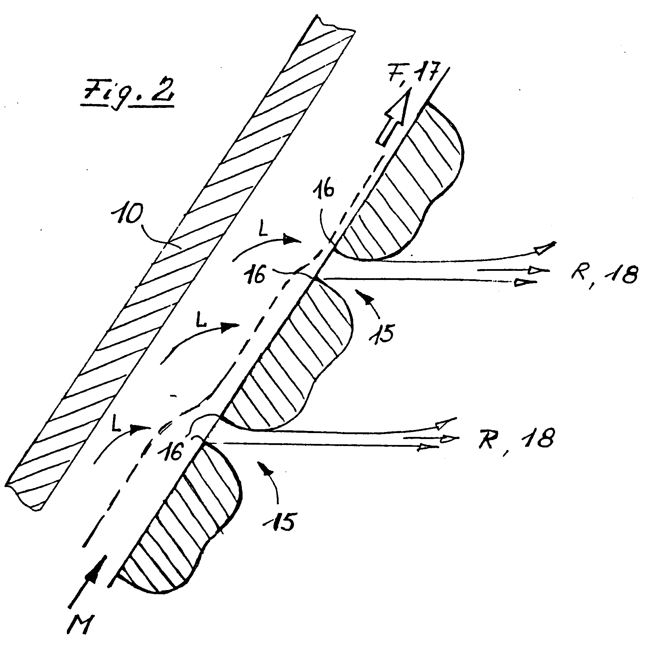

Die Detailansicht der Siebfläche 9 nach Fig. 2 zeigt in vergrößertem Maßstab die Sieböffnungen 15 an deren Abreißkanten 16 eine Abspaltung von fester Phase 17 bzw. Fasermaterial F und flüssiger Phase 18 bzw. Rohsaft R erfolgt. Eine nach dem Durchtritt des Rohsaftes 18 durch die Sieböffnung 15 einsetzende Dekompression (Bunsen Effekt) bewirkt in Verbindung mit durch Reibung hervorgerufener Scherung eine Turbulenz der Rohsaftströmung, die unter Bildung von Schaum 19 zu einer innigen Verbindung der im Rohsaft 18 enthaltenen Gas- und Pektinbestandteile führt.

Die am konisch erweiterten Ende des Siebkegels 3 abgeschleuderte feste Phase 17 bzw. das Fasermaterial F gelangt in den Feststoffsammelraum 20 und wird von dort zur weiteren Verarbeitung entnommen, wohingegen die durch die Sieböffnungen 15 abgeschleuderte flüssige Phase 18 bzw. der Rohsaft R über die Ablaufleitung 21 auf die schräge Siebfläche 22 eines Schüttelsiebes 23 geleitet wird, auf dem die im Schaum 19 gebundenen Pektinbestandteile vom Rohsaft R mechanisch getrennt werden.

Im Betrieb der Filterzentrifuge 1 zur Herstellung von Apfelsaft, wird Maische M aus Äpfeln über das Einlaufrohr 6 eingeleitet und mittels des Verteilkegels 4 sowie des Zahnbordflansches 7 und der Zahnringscheibe 8 in gleichförmiger Weise auf die Siebfläche 9 des Siebkegels 2 verteilt. Auf der Siebfläche 9 erfolgt eine Trennung der Maische M in die feste Phase 17 bzw. die Faserbestandteile F und in die flüssige Phase 18 bzw. den Rohsaft R aus dem sich während des Zentrifugiervorgangs das Pektin in Schaum gebunden absondert.

Die Zentrifuge 1 wird dabei im Dünnschichtverfahren betrieben, das dadurch gekennzeichnet ist, daß sich auf der Siebfläche 9 nur eine verhälnismäßig dünne Schicht aus Maische mit entsprechend geringer Verweildauer ausbildet. Der Winkel des Siebkegels 3 und die Drehzahl der Filterzentrifuge 1 sind dabei so gewählt, daß die Abtrennung der flüssigen Phase aus der Maische und die Abtrennung des aus der flüssigen Phase flottierenden, die Pektinbestandteile beinhaltenden Schaumes 19 in einem Zeitraum vor dem Eintreten einer Reaktion des Pektins mit Sauerstoff erfolgen kann.

Versuche haben gezeigt, daß im Zentrifugierverfahren zur Bindung des in der flüssigen Phase 18 bzw. im Rohsaft R enthaltenen Pektins in Schaumform ausreichende Luftmengen in den Rohsaft R eingetragen werden, doch kann es vorteilhaft sein, den Zutritt von Luft L zu der auf der Siebfläche sich ausbildenden Dünnschicht zu dosieren. Hierzu dient der Leitkegel 10, durch dessen im Bodenbereich angeordnete Öffnungen 11 Luft in den gewünschten Mengen auf die Dünnschicht geleitet werden kann.

In gleicher Weise kann über den Leitkegel 10 und dessen Öffnungen 11 auch die dosierte Zufuhr von Inertgasen, beispielsweise Kohlendioxid, erfolgen, wenn es erwünscht ist, die Reaktionszeit mit Sauerstoff zu verzögern.

Grundsätzlich kann der Zentrifugiervorgang auch vollständig in Inertgasatmosphäre erfolgen, womit verhindert werden kann, daß in Toträumen der Filterzentrifuge 1 sich absetzendes Material mit Sauerstoff reagiert und den Verfahrensablauf und die Produktqualität durch Keimbildung beeinträchtigt. Darüberhinaus ist eine mit Inertgas beaufschlagte Filterzentrifuge leichter zu reinigen.

Mit dem Leitkegel 10 und den daran befestigten wendelförmigen Leitblechen 12 kann zum einen die Schichtdicke der auf der Siebfläche 9 befindlichen Dünnschicht kontrolliert und zum anderen über die Dünnschicht geführte Luft L und/oder das Inertgas am zu schnellen Entweichen über den vom Siebkegel 2 und den vom Leitkegel 10 gebildeten Ringspalt gehindert werden. Mittels zweier am konisch erweiterten Ende des Leitkegels 10 angeordneter Sperringe 13 und 14 ist der Austrag der festen Phase kontrollierbar.

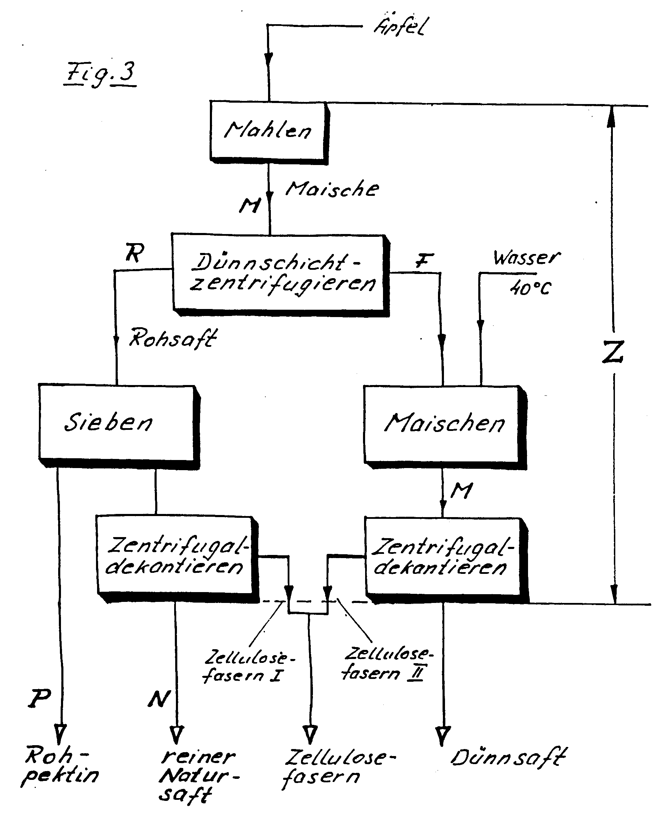

Nach dem in Fig. 3 dargestellten Blockschaltbild für die Herstellung von Apfelsaft werden die Äpfel nach dem Mahlen als Maische M im vorbeschriebenen Dünnschicht-Zentrifugierverfahren verarbeitet, wobei zum einen das Fasermaterial F und zum anderen der Rohsaft R gewonnen wird.

Während des Zentrifugierverfahrens scheidet sich das im Rohsaft R enthaltene Pektin durch Bindung an die Luftbestandteile als flottierender Schaum 19 ab, der im nachgeordneten Schüttelsieb 23 mechanisch abgesondert wird, so daß zum einen reines Pektin P und zum anderen Natursaft N gewonnen wird. Der Vorgang des Zentrifugierens und der mechanischen Abtrennung des Pektins läuft kontinuierlich und vor dem Eintreten einer Reaktion des Pektins mit Sauerstoff in ca. 3-5 Sekunden ab. Nach der Absonderung von restlichen Zellulosefasern I aus dem Natursaft in einem ersten Zentrifugaldekanter bzw. in einer ersten Vollmantel-Sedimentationszentrifuge wird als Endprodukt ein reiner Natursaft N (Zuckergehalt ca. 12 %) gewonnen.

Das im Dünnschicht-Zentrifugierverfahren gewonnene Fasermaterial F wird durch Zugabe von Wasser von vorzugsweise 40°C erneut aufgemaischt und in einem nachgeschalteten zweiten Zentrifugaldekanter bzw. in einer zweiten Vollmantel-Sedimentationszentrifuge in Zellulosefasern II und Dünnsaft (Zuckergehalt ca. 5 %) getrennt.

Der nach dem Dünnschicht-Zentrifugierverfahrens und dem Sieben gewonnene Natursaft N und das durch Zugabe von Wasser aufgemaischte Fasermaterial F sind weitestgehend entpektinisiert. Da jedoch noch geringfügige Restbestandteile von Pektin im Natursaft N und in den aufgemaischten Faserstoffen F noch zu einem Ausgelieren führen können, das die Trennung von flüssigen Bestandteilen von Faserbestandteilen beeinträchtigen kann, muß auch der Vorgang des Abtrennens von Zellulosefasern I und Zellulosefasern II im ersten und zweiten Zentrifugaldekanter im Zeitraum Z (Fig. 3) vor dem Eintreten einer Reaktion des Restpektins mit Sauerstoff abgeschlossen sein.

Der Zeitraum Z bemisst sich nach der Reaktionszeit des Pektins mit Sauerstoff, die ca. 20 Sekunden beträgt. Diese Reaktionszeit kann durch Verwendung von Inertgas entsprechend verzögert werden.

Die nach dem im Blockschaltbild (Fig. 3) dargestellten Herstellungsverfahren gewonnenen Endprodukte stellen zum einen reines Pektin P, reinen Natursaft N, reinen Dünnsaft und Zellulosefasern dar. Der reine Natursaft ist aufgrund der mechanischen Abtrennung des Pektins als vollkommen naturbelassen anzusehen. Desgleichen wird das Pektin in reiner Form gewonnen. Im Gegensatz hierzu kann mit den bisherigen Herstellungsverfahren das Pektin nur durch enzymatische oder biochemische Behandlung aus dem Rohsaft entfernt werden, wodurch zum einen die Naturbelassenheit des Apfelsaftes nicht gegeben ist und das Pektin nur in chemisch gebundener Form gewonnen wird.

## Patentansprüche

1. Verfahren zur Herstellung von pektinfreiem Saft, insbesondere Apfelsaft, bei dem aus einer durch Zellmahlung erhaltenen Maische aus Früchten die feste von der flüssigen Phase durch zentrifugaldekantieren getrennt wird, **gekennzeichnet** durch folgende Schritte:
a. die Maische M wird vor dem zentrifugaldekantieren unter Verwendung einer Filterzentrifuge (1) einem kontinuierlichen Zentrifugierverfahren unterzogen,
b. die im Filterzentrifugierverfahren gemäß Schritt a. von der festen Phase (17) getrennte flüssige Phase (18) und die sich aus der flüssigen Phase (18) separierenden, die Paektinbestandteile bindenden, auf der flüssigen Phase (18) flottierenden Schaumbestandteile (19) werden mechanisch voneinander getrennt,
c. sämtliche der vorgenannten Schritte werden, beginnend mit der Zellmahlung bzw. dem Maischen der Früchte, in einem Zeitraum (Z) vor dem Eintreten einer chemischen Reaktion des Pektins mit Sauerstoff durchgeführt.

2. Verfahren nach Anspruch 1, **dadurch gekennzeichnet**, daß die flüssige Phase (18) begast wird.

3. Verfahren nach einen der Ansprüche 1 oder 2, **dadurch gekennzeichnet**, daß innerhalb des Zeitraumes (Z) aus der von den Pektinbestandteilen getrennten flüssigen Phase in einem Zentrifugaldekanter Zellulosefasern I abgesondert werden.

4. Verfahren nach einem der Ansprüche 1 bis 3, **dadurch gekennzeichnet**, daß die im Zentrifugierverfahren abgesonderte feste Phase (17) durch Wasserzugabe aufgemaischt und in einem Zentrifugaldekanter innerhalb des Zeitraumes (Z) in Dünnsaft und in Zellulosefasern II getrennt wird.

5. Vorrichtung zur Durchführung des Verfahrens nach Anspruch 1, **dadurch gekennzeichnet**, daß eine Filterzentrifuge (1) mit einem Siebkegel (3) verwendet wird, die nach der Maßgabe von Schritt c. im Dünnschicht Zentrifugierverfahren betrieben wird.

6. Vorrichtung nach Anspruch 5, **dadurch gekennzeichnet**, daß die mechanische Trennung des auf der flüssigen Phase (18) bzw. dem Rohsaft (R) flottierenden Schaumes (19) in einem Schüttelsieb (23) erfolgt.

7. Vorrichtung nach Anspruch 5, **dadurch gekennzeichnet**, daß der Siebkegel (3) eine Bodenplatte (5) mit einem Verteilerkegel (4) aufweist.

8. Vorrichtung nach Anspruch 7, **dadurch gekennzeichnet**, daß ein Einlaufrohr (6) für Maische (M) in den Bereich der Bodenplatte (5) mündet und einen Zahnbordflansch (7) aufweist, dem im Abstand auf der Bodenplatte (5) eine Zahnringscheibe (8) zugeordnet ist.

9. Vorrichtung nach einem der Ansprüche 5 bis 8, **dadurch gekenn**zeichnet, daß der Siebkegel (3) einen im Abstand zu seiner Siebfläche (9) angeordneten Leitkegel (10) aufweist.

10. Vorrichtung nach Anspruch 9, **dadurch gekennzeichnet**, daß der Leitkegel (10) im Bereich der Bodenplatte (5) Öffnungen (11) für die Einleitung von Gas in den zwischen Siebkegel (3) und Leitkegel (10) eingeschlossenen Raum aufweist.

11. Vorrichtung nach Anspruch 10, **dadurch gekennzeichnet**, daß durch die Öffnungen (11) Luft (L) einleitbar ist.

12. Vorrichtung nach Anspruch 10, **dadurch gekennzeichnet**, daß durch die Öffnungen (11) ein Inertgas einleitbar ist.

13. Vorrichtung nach Anspruch 12, **dadurch gekennzeichnet**, daß das Inertgas Kohlendioxid ist.

14. Vorrichtung nach einem der Ansprüche 9 bis 13, **dadurch gekennzeichnet**, daß der Leitkegel (10) auf seiner der Siebfläche (9) zugewandten Innenfläche wendelförmig angeordnete Leitbleche (12) aufweist.

15. Vorrichtung nach einem der Ansprüche 9 bis 14, **dadurch gekennzeichnet**, daß am konisch erweiterten Ende des Leitkegels (10) mindestens ein den Ringspalt zwischen Siebkegel (3) und Leitkegel (10) begrenzender Sperring (13) angeordnet ist.

16. Vorrichtung nach einem der Ansprüche 5 bis 15, **dadurch gekennzeichnet**, daß die Zentrifugierung in einem geschlossenen Zentrifugengehäuse (2) erfolgt, in das Inertgas einleitbar ist.

## Claims

1. Process of production of pectin-free juice, particularly apple juice, whereby, from a fruit mash obtained by cell grinding, the solid phase is separated from the liquid phase by centrifugal decanting, characterized by the following steps:
a. the mash M, before centrifugal decantation, is subjected to continuous centrifuging, using a filter centrifuge (1).
b. the liquid phase (18) separated from the solid phase (17) in the filter centrifuging process according to step a., and the foam constituents (19) separating from the liquid phase (18), binding the pectin constituents and floating on the liquid phase (18) are separated from one another by mechanical means.
c. All the above steps, starting with the cell grinding and the mashing of the fruit, are carried out over a period (Z) preceding the inception of a chemical reaction of the pectin with oxygen.

2. Process according to claim 1, characterized in that gas is introduced into the liquid phase (18).

3. Process according to either claim 1 or claim 2, characterized in that, within the period (Z), cellulose fibres I are separated in a centrifugal decanter from the liquid phase separated from the pectin constituents.

4. Process according to one of claims 1 to 3, characterized in that the solid phase (17) separated during the centrifuging process is converted into a mash by the addition of water and is separated in a centrifugal decanter into thin juice and cellulose fibres II within the time period (Z).

5. Apparatus for carrying out the process according to claim 1, characterized in that use is made of a filter centrifuge (1) with a sieve cone (3) which, on the basis of step c,, is operated in the thin layer centrifuging process.

6. Apparatus according to claim 5, characterised in that the mechanical separation of the foam (19) floating on the liquid phase (18) or the raw juice (R) is effected in a vibrating screen (23).

7. Apparatus according to claim 5, characterized in that the sieve cone (3) has a bottom plate (5) with a distributor cone (4).

8. Apparatus according to claim 7, characterized in that an inlet pipe (6) for mash (M) opens out in the region of the bottom plate (5) and has a toothed rim flange (7) with which, spaced from the bottom plate (5), a toothed ring plate (8) is associated.

9. Apparatus according to one of claims 5 to 8, characterized in that the sieve cone (3) has a guide cone (10) mounted spaced from its sieving surface (9).

10. Apparatus according to claim 9, characterized in that the guide cone (10) has, in the region of the bottom plate (5), openings (11) for the introduction of gas into the space enclosed between the sieve cone (3) and the guide cone (10).

11. Apparatus according to claim 10, characterized in that air (L) can be introduced through the openings (11).

12. Apparatus according to claim 10, characterized in that an inert gas can be introduced through the openings (11).

13. Apparatus according to claim 12, characterized in that the inert gas is carbon dioxide.

14. Apparatus according to one of claims 9 to 13, characterized in that the guide cone (10) has on its inner surface facing the sieving surface (9) spirally arranged guide plates (12).

15. Apparatus according to one of claims 9 to 14, characterized in that at least one blocking ring (13) limiting the annular gap between the sieve cone (3) and the guide cone (10) is mounted on the conically widening end of the guide cone (10).

16. Apparatus according to one of claims 5 to 15, characterized in that centrifuging is carried out in an enclosed centrifuge housing (2) into which inert gas can be introduced.

## Revendications

1. Procédé de fabrication d'un jus, notamment d'un jus de pomme, exempt de pectine, dans lequel la phase solide d'un moût obtenu par broyage des cellules des fruits est séparée de la phase liquide par décantation centrifuge, procédé caractérisé par les étapes suivantes :
a. le moût M est soumis, avant la décantation centrifuge, à une centrifugation en continu par utilisation d'une centrifugeuse filtrante (1).
b. la phase liquide (18), séparée de la phase solide (17) dans la centrifugation avec filtration de l'étape a ; et les composants de l'écume (19) qui se séparent de cette phase liquide (18) en fixant les parties contenant de la pectine et qui surnagent sur ladite phase liquide (18), sont séparés mécaniquement les uns des autres ;
c. toutes les étapes ci-dessus sont exécutées, à partir du broyage des cellules, ou du moût de fruits dans un intervalle de temps (Z) inférieur à celui correspondant à un début de réaction chimique de la pectine avec l'oxygène.

2. Procédé selon la revendication 1, caractérisé en ce qu'un gaz est injecté dans la phase liquide (18).

3. Procédé selon l'une des revendications 1 ou 2, caractérisé en ce que des fibres cellulosiques (I) sont isolées, dans l'intervalle de temps (Z), de la phase liquide séparée des particules de pectine dans un décanteur centrifuge.

4. Procédé selon l'une des revendications 1 à 3, caractérisé en ce que la phase solide (17) isolée dans la centrifugation est retransformée en moût par addition d'eau et séparée, pendant l'intervalle de temps (Z), dans un décanteur centrifuge, en jus léger et en fibres cellulosiques (II).

5. Appareil pour la mise en oeuvre du procédé selon la revendication 1, caractérisé en ce que l'on utilise une centrifugeuse filtrante (1) qui comporte un filtre conique (3) et qui, conformément à l'étape c, fonctionne selon un procédé de centrifugation en couche mince.

6. Appareil selon la revendication 5, caractérisé en ce que la séparation mécanique de l'écume (19) qui surnage sur la phase liquide (18) -le jus brut R- est effectuée dans un tamis à secousses (23).

7. Appareil selon la revendication 5, caractérisé en ce que le filtre conique (3) comporte une plaque de base (5) à cône répartiteur (4).

8. Appareil selon la revendication 7, caractérisé en ce qu'un tuyau (6) d'arrivée du moût (M) débouche près de la plaque de base (5) et comporte une collerette (7) à profil denté, avec laquelle coopère une couronne (8) de la plaque de base (5), à profil denté, disposée à une certaine distance de cette collerette (7).

9. Appareil selon l'une des revendications 5 à 8, caractérisé en ce que le filtre conique (3) comporte un cône directeur (10), disposé à une certaine distance de sa surface filtrante (9).

10. Appareil selon la revendication 9, caractérisé en ce que le cône directeur (10) comporte, au voisinage de la plaque de base (5), des ouvertures (11) destinées à introduire un gaz entre ce filtre directeur (10) et le filtre conique (3).

11. Appareil selon la revendication 10, caractérisé en ce que de l'air (L) peut être introduit par les ouvertures (11).

12. Appareil selon la revendication 10, caractérisé en ce qu'un gaz inerte peut être introduit par les ouvertures (11).

13. Appareil selon la revendication 12, caractérisé en ce que le gaz inerte est le bioxyde de carbone.

14. Appareil selon l'une des revendications 9 à 13, caractérisé en ce que le cône directeur (10) comporte, sur sa surface intérieure, tournée vers la surface filtrante (9), des déflecteurs (12) disposés hélicoïdalement.

15. Appareil selon l'une des revendications 9 à 14, caractérisé en ce qu'au moins une couronne de retenue (13), destinée à limiter l'interstice annulaire compris entre le filtre conique (3) et ce cône directeur (10), est disposée à l'extrémité large dudit cône directeur (10).

16. Appareil selon l'une des revendications 5 à 15, caractérisé en ce que la centrifugation est effectuée dans une enveloppe (2) fermée, dans laquelle il est possible d'introduire un gaz inerte.
